# EUROPÄISCHE PATENTSCHRIFT

(11) **EP 3 089 902 B1**
(45) Veröffentlichungstag und Bekanntmachung des Hinweises auf die Patenterteilung: **18.12.2019**
(21) Anmeldenummer: 15702972.9
(22) Anmeldetag: 19.01.2015
(51) Int. Cl.: B61D 37/00, B61D 29/00

(54) **FAHRZEUG MIT GEPÄCKABLAGE**
VEHICLE COMPRISING A LUGGAGE RACK
VÉHICULE COMPRENANT UN EMPLACEMENT À BAGAGES

(30) Priorität: 04.03.2014 DE 102014203893
(43) Veröffentlichungstag der Anmeldung: 09.11.2016
(73) Patentinhaber: Siemens Mobility GmbH, 81739 München (DE)
(72) Erfinder: RICKEN, Benjamin, 50733 Köln (DE); STAUB, Ralf, 47799 Krefeld (DE)
(86) Internationale Anmeldenummer: PCT/EP2015/050844
(87) Internationale Veröffentlichungsnummer: WO 2015/132011

(56) Entgegenhaltungen:
- WO-A1-95/18727
- JP-A- 2007 176 427
- JP-A- 2009 202 752
- US-A- 2 217 688
- US-A- 2 263 123
- US-A- 2 284 356
- US-A- 2 302 092
- US-A- 2 622 189
- US-A1- 2004 256 875

## Beschreibung

Die Erfindung bezieht sich auf ein Fahrzeug, insbesondere Schienenfahrzeug, mit zumindest einer Gepäckablage mit mindestens einem Gepäcktrennsteg, der in den Gepäckablagebereich der Gepäckablage zumindest abschnittsweise hineinragt, diesen in benachbarte Ablageabschnitte unterteilt und ein Verrutschen von Gepäck zwischen den benachbarten Ablageabschnitten erschwert oder verhindert. Ein solches Fahrzeug ist beispielsweise aus der US-A-2,217,688 bekannt.

Bei dem dort beschriebenen Fahrzeug ist in dem Gepäcktrennsteg zumindest ein Lichtausgabeelement angeordnet, und zwar derart, dass auszustrahlendes Licht von der Gepäckablage aus nach unten strahlt.

Der Erfindung liegt die Aufgabe zugrunde, ein Fahrzeug mit gegenüber vorbekannten Fahrzeugen verbesserter Gepäckablagenbeleuchtung anzugeben.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass an dem Gepäcktrennsteg zumindest ein Lichtausgabeelement angeordnet ist.

Ein wesentlicher Vorteil des erfindungsgemäßen Fahrzeugs ist darin zu sehen, dass durch die erfindungsgemäße Platzierung des oder der Lichtausgabeelemente ein Verdecken bzw. Abschatten des erzeugten Lichts durch in der Gepäckablage befindliche Gepäckstücke vermieden oder zumindest deutlich reduziert wird. Die Gepäcktrennstege, die die Gepäckablage in benachbarte Ablageabschnitte unterteilen und ein Verrutschen von Gepäck zwischen den benachbarten Ablageabschnitten erschweren oder verhindern, führen nämlich zu einem deutlichen Spalt zwischen den benachbarten Gepäckstücken. Durch die erfindungsgemäß vorgesehene Anordnung von Lichtausgabeelementen im Bereich des oder der Gepäcktrennstege wird eine Beleuchtung der Gepäckablage ermöglicht, die im Wesentlichen unabhängig davon ist, ob oder nicht Gepäckstücke auf der Gepäckablage liegen.

Bezüglich der Ausrichtung der Strahlung des oder der Lichtausgabeelemente ist es vorgesehen, dass das Lichtausgabeelement derart angeordnet ist, dass die Hauptstrahlrichtung der Lichtkeule des abgestrahlten Lichts in derjenigen senkrecht verlaufenden Ebene liegt, die durch den Gepäcktrennsteg zwischen den benachbarten Ablageabschnitten aufgespannt wird.

Das Lichtausgabeelement ist derart angeordnet und ausgerichtet, dass dessen Licht auf den oberhalb der Gepäckablage befindlichen Voutenbereich, insbesondere die Voutenverkleidung, des Fahrzeugs und/oder auf den oberhalb der Gepäckablage befindlichen Abschnitt der Fahrzeugdecke fällt.

Vorzugsweise weist der Gepäcktrennsteg ein vorderes, einer Gepäckeinführseite der Gepäckablage zugewandtes Stegende und ein hinteres, einem hinteren Anschlag der Gepäckablage zugewandtes Stegende auf. Bei einer solchen Ausgestaltung ist das Lichtausgabeelement vorzugsweise im Bereich des hinteren Stegendes angeordnet.

Eine optimale Ausleuchtung des oberhalb des Gepäcktrennsteges befindlichen Spaltbereichs zwischen den benachbarten Ablageabschnitten wird erreicht, wenn das Lichtausgabeelement derart ausgerichtet ist, dass die Hauptstrahlrichtung der Lichtkeule des abgestrahlten Lichts oberhalb der oberen Schmalseite des Gepäcktrennstegs unter einem spitzen Winkel von der oberen Schmalseite nach oben weg und/oder in Richtung der Gepäckeinführseite verläuft.

Um die Lichtfarbe verändern oder anpassen zu können, wird es als vorteilhaft angesehen, wenn an dem Gepäcktrennsteg zumindest zwei Lichtausgabeelemente angeordnet sind, deren Lichtfarbe sich unterscheidet, oder zumindest ein Lichtausgabeelement angeordnet ist, dessen Lichtfarbe verstellbar ist.

Der Gepäcktrennsteg kann ebenfalls als Leuchtmittel herangezogen werden und zum Leuchten gebracht werden. Um ein Leuchten des Gepäcktrennsteges zu erreichen, kann beispielsweise vorgesehen sein, dass der Gepäcktrennsteg ganz oder abschnittsweise aus einem transparenten oder lumineszierenden Material besteht.

Im Falle eines Gepäcktrennsteges aus transparentem oder lumineszierendem Material wird es als vorteilhaft angesehen, wenn das Lichtausgabeelement oder eines der Lichtausgabeelemente auf den Gepäcktrennsteg gerichtet ist und das Licht des Lichtausgabeelements in das transparente oder lumineszierende Material eingekoppelt wird, wodurch der Gepäcktrennsteg zum Leuchten gebracht wird.

Mit Blick auf eine einfache Ansteuerung der Lichterzeugung wird es als vorteilhaft angesehen, wenn das Lichtausgabeelement oder zumindest eines der Lichtausgabeelemente eine elektrisch betriebene Lichtquelle ist, die außen an dem Gepäcktrennsteg oder in dem Gepäcktrennsteg angeordnet ist.

Alternativ kann vorgesehen sein, dass das Lichtausgabeelement oder zumindest eines der Lichtausgabeelemente ein passives Lichtleitelement ist, das mit einer aktiven Lichtquelle in Verbindung steht und das Licht der aktiven Lichtquelle in den Bereich des Gepäcktrennsteges leitet und im Bereich des Gepäcktrennsteges ausgibt.

Das passive Lichtleitelement ist vorzugsweise zumindest abschnittsweise außen an dem Gepäcktrennsteg und/oder zumindest abschnittsweise innerhalb des Gepäcktrennstegs angeordnet.

Bei dem passiven Lichtleitelement handelt es sich bevorzugt um eine Lichtleitfaser oder ein Lichtleitfaserbündel, besondere bevorzugt um eine Glasfaser oder ein Glasfaserbündel.

Die mit dem passiven Lichtleitelement in Verbindung stehende aktive Lichtquelle ist bevorzugt von dem Gepäcktrennsteg getrennt und von diesem beabstandet angeordnet.

Die Erfindung wird nachfolgend anhand von Ausführungsbeispielen näher erläutert; dabei zeigen beispielhaft:
- Figur 1: im Querschnitt ein Ausführungsbeispiel für eine Gepäckablage, bei der am Gepäcktrennsteg drei elektrische Lichtquellen angeordnet sind,
- Figur 2: die Ausrichtung der Lichtkeule des von den drei elektrischen Lichtquellen gemäß Figur 1 erzeugten Lichts in einer Sicht auf die Gepäckeinführseite der Gepäckablage gemäß Figur 1,
- Figur 3: die Gepäckablage gemäß Figur 1 in einer dreidimensionalen Sicht schräg von der Seite,
- Figur 4: ein Ausführungsbeispiel für eine Gepäckablage mit einem Gepäcktrennsteg, der mit passiven Lichtleitelementen ausgestattet ist, die mit einer separat angeordneten Lichtquelleneinrichtung in Verbindung stehen,
- Figur 5: ein Ausführungsbeispiel für eine Gepäckablage, bei der ein Lichtausgabeelement auf einen Gepäcktrennsteg gerichtet ist und den Gepäcktrennsteg zum Leuchten bringt, und
- Figur 6: ein weiteres Ausführungsbeispiel für eine Gepäckablage, bei der ein Lichtausgabeelement auf einen Gepäcktrennsteg gerichtet ist und den Gepäcktrennsteg zum Leuchten bringt.

In den Figuren werden der Übersicht halber für identische oder vergleichbare Komponenten stets dieselben Bezugszeichen verwendet.

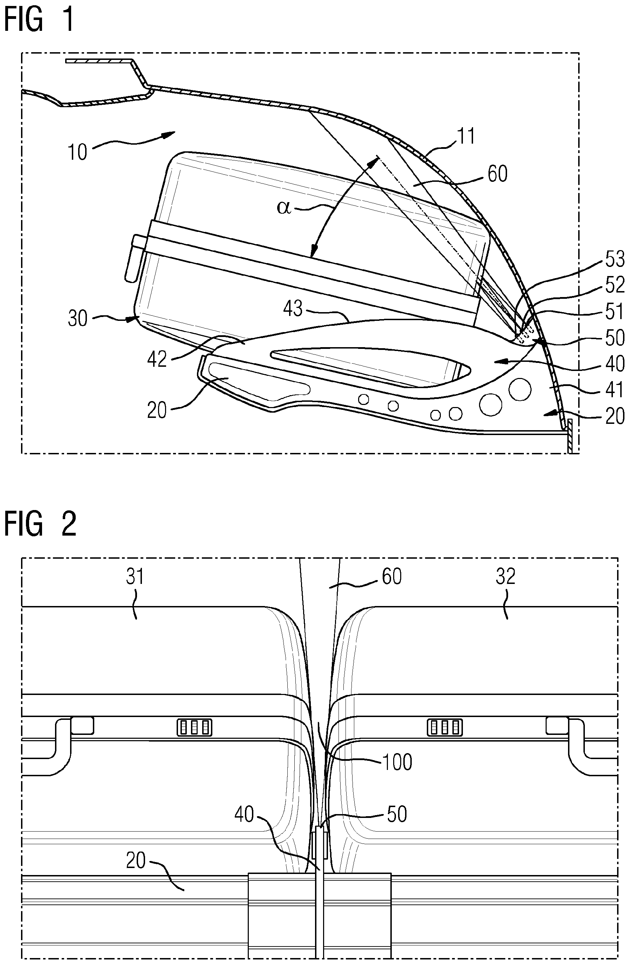

Die Figur 1 zeigt den Innenraum eines Schienenfahrzeugs 10, der mit einer Gepäckablage 20 ausgestattet ist. Um ein Verrutschen von Gepäck 30 entlang der Längsrichtung des Schienenfahrzeugs zu verhindern oder zu erschweren, ist die Gepäckablage mit einem oder mehreren Trennstegen 40 ausgestattet, die sich von einem hinteren Anschlag der Gepäckablage 20 nach vorn in Richtung einer Gepäckeinführseite der Gepäckablage 20 erstrecken. Das dem hinteren Anschlag der Gepäckablage 20 zugewandte Stegende des Gepäcktrennsteges 40 ist in der Figur 1 mit dem Bezugszeichen 41 gekennzeichnet; das vordere, der Gepäckeinführseite zugewandte Stegende des Gepäcktrennsteges 40 trägt in der Figur 1 das Bezugszeichen 42.

Im Bereich des hinteren Stegendes 41 des Gepäcktrennsteges 40 ist eine Leuchteinrichtung 50 montiert, die drei als Lichtausgabeelemente fungierende elektrische Lichtquellen 51, 52 und 53 umfasst. Die drei elektrischen Lichtquellen 51, 52 und 53 erzeugen im Betrieb Licht, das in Richtung des Voutenbereichs 11 des Schienenfahrzeugs 10 gestrahlt wird. Unter dem Begriff Voutenbereich wird der Übergangsbereich zwischen der Seitenwand und der Fahrzeugdecke verstanden.

Das Licht der drei Lichtquellen 51, 52 und 53 überlagert sich bei dem Ausführungsbeispiel gemäß Figur 1 derart, dass eine gemeinsame Lichtkeule 60 gebildet wird, deren Lichtfarbe durch Mischung der Lichtfarben der drei Lichtquellen 51, 52 und 53 bestimmt wird.

Die Figur 1 zeigt, dass die Ebene der Lichtkeule 60 bzw. die Ebene der Hauptstrahlrichtung der Lichtkeule 60 des von den drei Lichtquellen 51, 52 und 53 abgestrahlten Lichts in einer senkrechten Ebene liegt, die durch den Gepäcktrennsteg 40 definiert bzw. aufgespannt wird. Die Lichtkeule 60 ist dabei derart ausgerichtet, dass deren Hauptstrahlrichtung oberhalb der oberen Schmalseite 43 des Gepäcktrennsteges 40 nach vorn in Richtung auf die Gepäckeinführseite der Gepäckablage gerichtet ist und unter einem spitzen Winkel α von der oberen Schmalseite 43 nach oben weg verläuft. Der Winkel α liegt vorzugsweise in einem Bereich zwischen 20° und 70°.

Die Lichtfarbe der drei elektrischen Lichtquellen 51, 52 und 53 ist vorzugsweise unterschiedlich, so dass durch eine individuelle Ansteuerung bzw. durch ein Verändern der Lichtstrahlleistung der einzelnen Lichtquellen die Lichtfarbe der Lichtkeule 60 verstellt werden kann.

Die Figur 2 zeigt die Gepäckablage 20 gemäß Figur 1 in einer Sicht entlang der Gepäckeinführrichtung. Es lassen sich zwei Gepäckstücke 31 und 32 erkennen, die benachbart nebeneinander in der Gepäckablage 20 liegen und durch den Gepäcktrennsteg 40 voneinander getrennt sind. Der Gepäcktrennsteg 40 führt zu einem Spalt 100 zwischen den beiden Gepäckstücken 31 und 32, der durch die Lichtkeule 60 bzw. von der Leuchteinrichtung 50 beleuchtet wird.

Durch die Anordnung der Leuchteinrichtung 50 im Bereich des Gepäcktrennsteges 40 ist es somit möglich, die Gepäckablage 20 auch nach einem Befüllen mit Gepäckstücken 31 und 32 von hinten zu beleuchten und dabei sicherzustellen, dass das Licht der Leuchteinrichtung 50 den Voutenbereich 11 erreicht und der Voutenbereich 11 nicht von den Gepäckstücken 31 und 32 verdeckt bzw. abgeschattet wird.

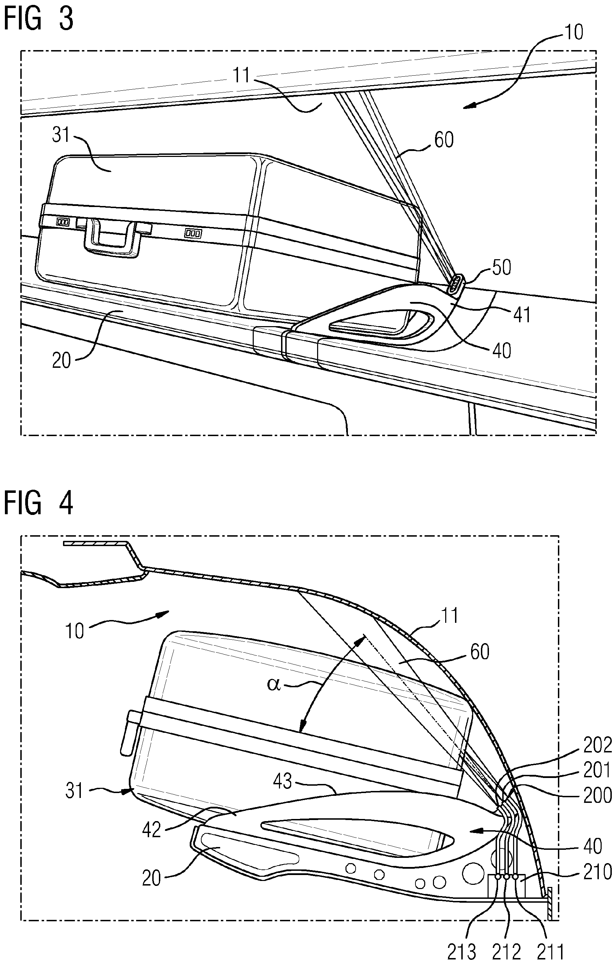

Die Figur 3 zeigt die Gepäckablage 20 gemäß den Figuren 1 und 2 in einer dreidimensionalen Sicht schräg von der Seite. Man erkennt den Gepäcktrennsteg 40 sowie die im Bereich des hinteren Stegendes 41 angeordnete Leuchteinrichtung 50, mit der die Lichtkeule 60 erzeugt und das Beleuchten des Voutenbereichs 11 in der senkrecht verlaufenden Ebene, in der sich der Gepäcktrennsteg 40 befindet, ermöglicht wird.

Die Figur 4 zeigt ein Fahrzeug 10 mit einer Gepäckablage 20, bei der eine Beleuchtung des Voutenbereichs 11 oberhalb des Gepäcktrennstegs 40 mittels dreier passiver Lichtleitelemente 200, 201 und 202 erfolgt, die als Lichtausgabeelemente fungieren. Die drei passiven Lichtleitelemente 200, 201 und 202 stehen mit einer Lichtquelleneinrichtung 210 in Verbindung, die von dem Gepäcktrennsteg 40 getrennt angeordnet ist. Die Lichtquelleneinrichtung 210 weist drei aktive Lichtquellen 211, 212 und 213 auf, die jeweils mit einem der zugeordneten passiven Lichtleitelemente 200, 201 und 202 verbunden sind. Bei den Lichtleitelementen 200, 201 und 202 kann es sich um Lichtleitfasern oder Lichtleitfaserbündel handeln, beispielsweise in Form von Glasfasern oder Glasfaserbündeln.

Werden die aktiven Lichtquellen 211, 212 und 213 der Lichtquelleneinrichtung 210 aktiviert, so erzeugen sie Licht, das von den passiven Lichtleitelementen 200, 201 und 202 zum Gepäcktrennsteg 40 geleitet und dort abgestrahlt wird. Das von den passiven Lichtleitelementen 200, 201 und 202 ausgegebene Licht überlagert sich zu einer gemeinsamen Lichtkeule 60, die in den Voutenbereich 11 oberhalb des Gepäcktrennstegs 40 abgestrahlt wird. Der Abstrahlwinkel der Lichtkeule 60 ist vorzugsweise derart gewählt, dass die Lichtkeule 60 und die obere Schmalseite 43 des Gepäcktrennsteges 40 einen spitzen Winkel α bilden. Der Winkel α liegt vorzugsweise in einem Bereich zwischen 20° und 70°. Die Ebene der Lichtkeule 60 bzw. die Ebene der Hauptstrahlrichtung der Lichtkeule 60 liegt in einer senkrechten Ebene, die durch den Gepäcktrennsteg 40 definiert bzw. aufgespannt wird.

Die aktiven Lichtquellen 211, 212 und 213 sind vorzugsweise derart ausgestaltet, dass sie Licht mit unterschiedlichen Lichtfarben erzeugen. Durch eine unterschiedliche Ansteuerung der drei Lichtquellen 211, 212 und 213 ist es in einem solchen Falle möglich, die Farbe der Lichtkeule 60 zu verändern bzw. so einzustellen, dass die Lichtkeule 60 eine vorgegebene Wunschfarbe aufweist.

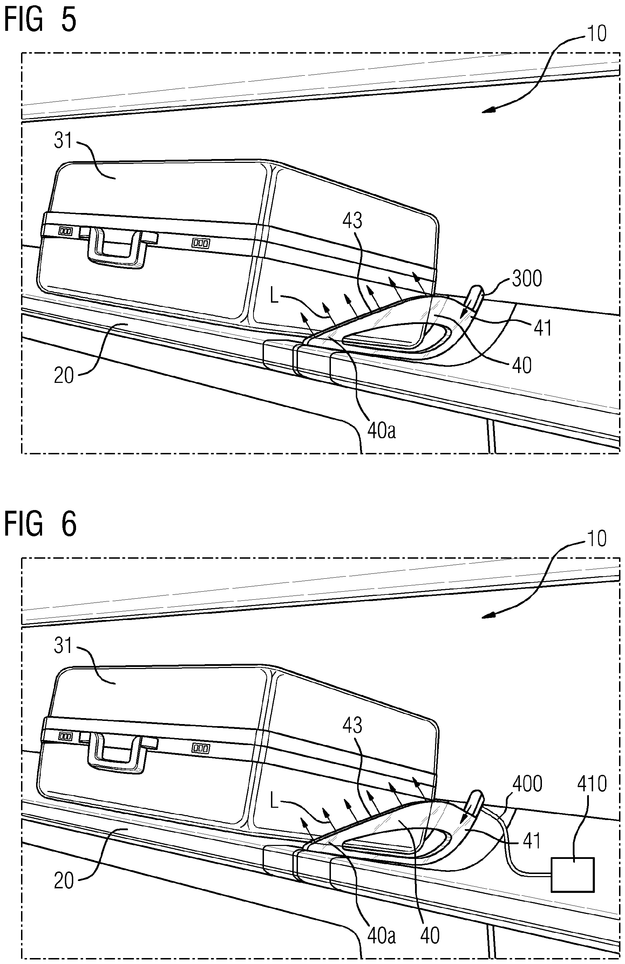

Die Figur 5 zeigt ein Ausführungsbeispiel für eine Gepäckablage 20, bei der die Gepäcktrennstege 40 aus einem transparenten oder lumineszierenden Material 40a bestehen. Bei dem Material 40a kann es sich beispielsweise um Plexiglas bzw. Polymethylmethacrylat handeln.

Im Bereich des hinteren Stegendes 41 des Gepäcktrennstegs 40 ist ein Lichtausgabeelement 300 angeordnet, das sein Licht in den Gepäcktrennsteg 40 einkoppelt und somit den Gepäcktrennsteg 40 insgesamt zum Leuchten bringt. Das von dem Lichtausgabeelement 300 eingekoppelte Licht wird durch den Gepäcktrennsteg 40 geleitet und sowohl an der oberen Schmalseite 43 des Gepäcktrennstegs 40 als auch an den beiden an die obere Schmalseite 43 angrenzenden Breitseiten des Gepäcktrennstegs 40 abgestrahlt. Das von dem Gepäcktrennsteg 40 abgestrahlte Licht ist in der Figur 5 durch Pfeile mit dem Bezugszeichen L gekennzeichnet.

Bei dem Ausführungsbeispiel gemäß Figur 5 handelt es sich bei dem Lichtausgabeelement 300 um ein aktives Lichtausgabeelement bzw. um eine aktive Lichtquelle.

Die Figur 6 zeigt ein Ausführungsbeispiel für eine Gepäckablage 20, deren Gepäcktrennsteg(e) 40 aus einem transparenten oder lumineszierenden Material 40a bestehen, wie dies im Zusammenhang mit dem Ausführungsbeispiel gemäß Figur 5 erläutert worden ist. Im Unterschied zu dem Ausführungsbeispiel gemäß Figur 5 ist zum Einkoppeln von Licht in den Gepäcktrennsteg 40 als Lichtausgabeelement ein passives Lichtleitelement 400 vorgesehen, das mit einer aktiven Lichtquelle 410 in Verbindung steht und das Licht der aktiven Lichtquelle 410 in den Bereich des Gepäcktrennsteges 40 leitet und in den Gepäcktrennsteg 40 einkoppelt. Das in das Material 40a des Gepäcktrennsteges 40 eingekoppelte Licht verlässt diesen im Bereich der oberen Schmalseite 43 sowie im Bereich der an die obere Schmalseite 43 angrenzenden Breitseiten des Gepäcktrennsteges 40, wie in der Figur 6 durch Pfeile mit dem Bezugszeichen L angedeutet ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fahrzeug, insbesondere Schienenfahrzeug (10), mit zumindest einer Gepäckablage (20) mit mindestens einem Gepäcktrennsteg (40), der in den Gepäckablagebereich der Gepäckablage (20) zumindest abschnittsweise hineinragt, diesen in benachbarte Ablageabschnitte unterteilt und ein Verrutschen von Gepäck (30) zwischen den benachbarten Ablageabschnitten erschwert oder verhindert,
**dadurch gekennzeichnet, dass**
an dem Gepäcktrennsteg (40) zumindest ein Lichtausgabeelement (51-53, 200-202, 300, 400) angeordnet ist,
das Lichtausgabeelement (51-53, 200-202, 300, 400) derart angeordnet ist, dass die Hauptstrahlrichtung der Lichtkeule (60) des abgestrahlten Lichts in derjenigen senkrecht verlaufenden Ebene liegt, die durch den Gepäcktrennsteg (40) zwischen den benachbarten Ablageabschnitten aufgespannt wird, und
das Lichtausgabeelement (51-53, 200-202, 300, 400) derart angeordnet und ausgerichtet ist, dass dessen Licht auf den oberhalb der Gepäckablage (20) befindlichen Voutenbereich (11), insbesondere die Voutenverkleidung, des Fahrzeugs und/oder auf den oberhalb der Gepäckablage (20) befindlichen Abschnitt der Fahrzeugdecke fällt.

2. Fahrzeug nach Anspruch 1,
**dadurch gekennzeichnet, dass**
- der Gepäcktrennsteg (40) ein vorderes, einer Gepäckeinführseite der Gepäckablage (20) zugewandtes Stegende (42) und ein hinteres, einem hinteren Anschlag der Gepäckablage (20) zugewandtes Stegende (41) aufweist und
- das Lichtausgabeelement (51-53, 200-202, 300, 400) im Bereich des hinteren Stegendes (41) angeordnet ist.

3. Fahrzeug nach einem der voranstehenden Ansprüche,
**dadurch gekennzeichnet, dass**
das Lichtausgabeelement (51-53, 200-202, 300, 400) derart ausgerichtet ist, dass die Hauptstrahlrichtung der Lichtkeule (60) des abgestrahlten Lichts oberhalb der oberen Schmalseite (43) des Gepäcktrennstegs (40) unter einem spitzen Winkel
(α) von der oberen Schmalseite (43) nach oben weg und/oder in Richtung der Gepäckeinführseite verläuft.

4. Fahrzeug nach einem der voranstehenden Ansprüche,
**dadurch gekennzeichnet, dass**
an dem Gepäcktrennsteg (40), in dem Gepäcktrennsteg (40) oder zumindest im Bereich des Gepäcktrennstegs (40) zumindest zwei Lichtausgabeelemente (51-53, 200-202) angeordnet sind, deren Lichtfarbe sich unterscheidet, oder zumindest ein Lichtausgabeelement angeordnet ist, dessen Lichtfarbe verstellbar ist.

5. Fahrzeug nach einem der voranstehenden Ansprüche,
**dadurch gekennzeichnet, dass**
der Gepäcktrennsteg (40) ganz oder abschnittsweise aus einem transparenten oder lumineszierenden Material (40a) besteht.

6. Fahrzeug nach Anspruch 5,
**dadurch gekennzeichnet, dass**
das Lichtausgabeelement (300, 400) oder zumindest eines der Lichtausgabeelemente auf den Gepäcktrennsteg (40) gerichtet ist und das Licht des Lichtausgabeelements (300, 400) in das transparente oder lumineszierende Material (40a) eingekoppelt wird, wodurch der Gepäcktrennsteg (40) zum Leuchten gebracht wird.

7. Fahrzeug nach einem der voranstehenden Ansprüche,
**dadurch gekennzeichnet, dass**
das Lichtausgabeelement (51-53, 300) oder zumindest eines der Lichtausgabeelemente eine elektrisch betriebene Lichtquelle ist, die außen an dem Gepäcktrennsteg (40) oder in dem Gepäcktrennsteg (40) angeordnet ist.

8. Fahrzeug nach einem der voranstehenden Ansprüche,
**dadurch gekennzeichnet, dass**
das Lichtausgabeelement oder zumindest eines der Lichtausgabeelemente ein passives Lichtleitelement (200-202, 400) ist, das mit einer aktiven Lichtquelle (211-213, 410) in Verbindung steht und das Licht der aktiven Lichtquelle (211-213, 410) in den Bereich des Gepäcktrennstegs (40) leitet und im Bereich des Gepäcktrennstegs (40) ausgibt.

9. Fahrzeug nach Anspruch 8,
**dadurch gekennzeichnet, dass**
das passive Lichtleitelement (200-202, 400) zumindest abschnittsweise außen an dem Gepäcktrennsteg (40) und/oder zumindest abschnittsweise innerhalb des Gepäcktrennstegs (40) angeordnet ist.

10. Fahrzeug nach einem der voranstehenden Ansprüche 8-9,
**dadurch gekennzeichnet, dass**
die mit dem passiven Lichtleitelement (200-202, 400) in Verbindung stehende aktive Lichtquelle (211-213, 410) von dem Gepäcktrennsteg (40) getrennt ist und von diesem beabstandet angeordnet ist.

## Claims

1. Vehicle, in particular rail vehicle (10), comprising at least one luggage rack (20) with at least one luggage-separating web (40) which projects at least in sections into the luggage rack region of the luggage rack (20), divides said luggage rack region into adjacent rack sections and impedes or prevents slipping of luggage (30) between the adjacent rack sections, **characterized in that** at least one light-emitting element (51-53, 200-202, 300, 400) is arranged on the luggage-separating web (40), the light-emitting element (51-53, 200-202, 300, 400) is arranged in such a manner that the main beam direction of the light beam (60) of the emitted light lies in the same vertically running plane which is spanned by the luggage-separating web (40) between the adjacent rack sections, and the light-emitting element (51-53, 200-202, 300, 400) is arranged and oriented in such a manner that the light thereof falls onto the haunch region (11), located above the luggage rack (20), in particular the haunch covering, of the vehicle and/or onto that section of the vehicle ceiling which is located above the luggage rack (20).

2. Vehicle according to the Claim 1, **characterized in that**
- the luggage-separating web (40) has a front web end (42) facing a luggage insertion side of the luggage rack (20) and a rear web end (41) facing a rear stop of the luggage rack (20), and
- the light-emitting element (51-53, 200-202, 300, 400) is arranged in the region of the rear web end (41).

3. Vehicle according to either of the preceding claims, **characterized in that** the light-emitting element (51-53, 200-202, 300, 400) is oriented in such a manner that the main beam direction of the light beam (60) of the emitted light above the upper narrow side (43) of the luggage-separating web (40) runs at an acute angle (α) upwards away from the upper narrow side (43) and/or in the direction of the luggage insertion side.

4. Vehicle according to one of the preceding claims, **characterized in that** at least two light-emitting elements (51-53, 200-202), the light colour of which differs, or at least one light-emitting element, the light colour of which is adjustable, are or is arranged on the luggage-separating web (40), in the luggage-separating web (40) or at least in the region of the luggage-separating web (40).

5. Vehicle according to one of the preceding claims, **characterized in that** the luggage-separating web (40) is composed entirely or in sections of a transparent or luminous material (40a).

6. Vehicle according to Claim 5, **characterized in that** the light-emitting element (300, 400) or at least one of the light-emitting elements is directed onto the luggage-separating web (40) and the light of the light-emitting element (300, 400) is coupled into the transparent or luminous material (40a), as a result of which the luggage-separating web (40) is illuminated.

7. Vehicle according to one of the preceding claims, **characterized in that** the light-emitting element (51-53, 300) or at least one of the light-emitting elements is an electrically operated light source which is arranged on the outside of the luggage-separating web (40) or in the luggage-separating web (40).

8. Vehicle according to one of the preceding claims, **characterized in that** the light-emitting element or at least one of the light-emitting elements is a passive light-conducting element (200-202, 400) which is connected to an active light source (211-213, 410) and conducts the light of the active light source (211-213, 410) into the region of the luggage-separating web (40) and emits said light in the region of the luggage-separating web (40).

9. Vehicle according to Claim 8, **characterized in that** the passive light-conducting element (200-202, 400) is arranged at least in sections on the outside of the luggage-separating web (40) and/or at least in sections inside the luggage-separating web (40).

10. Vehicle according to either of the preceding Claims 8-9, **characterized in that** the active light source (211-213, 410) connected to the passive light-conducting element (200-202, 400) is separated from the luggage-separating web (40) and is arranged at a distance therefrom.

## Revendications

1. Véhicule, notamment véhicule (10) ferroviaire, comprenant au moins un dépôt (20) de bagages ayant au moins une traverse (40) de séparation des bagages, qui pénètre, au moins par tronçons, dans la partie du dépôt (20) de bagages où les bagages sont déposés, la subdivise en des parties de dépôt voisines et rend plus difficile ou empêche qu'un bagage (30) glisse entre les parties de dépôt voisines,
**caractérisé en ce que**
sur la traverse (40) de séparation des bagages est disposé au moins un élément (51 à 53, 200 à 202, 300, 400) d'émission de lumière,
l'élément (51 à 53, 200 à 202, 300, 400) d'émission de lumière est disposé de manière à ce que la direction principale de rayonnement du lobe (60) lumineux de la lumière émise se trouve dans le plan, qui s'étend verticalement et qui passe par la traverse (40) de séparation des bagages entre les parties de dépôt voisines,
et
l'élément (51 à 53, 200 à 202, 300, 400) d'émission de lumière est disposé et conçu de manière à ce que sa lumière soit incidente sur la partie (11) en voûte se trouvant au-dessus du dépôt (20) de bagages, notamment sur l'habillage en voûte, du véhicule et/ou sur la partie, se trouvant au-dessus du dépôt (20) de bagages, du plafond du véhicule.

2. Véhicule suivant la revendication 1,
**caractérisé en ce que**
- la traverse (40) de séparation des bagages a une extrémité (42) avant, tournée vers le côté d'introduction des bagages du dépôt (20) de bagages, et une extrémité (41) arrière, tournée vers une butée arrière du dépôt (20) de bagages
et
- l'élément (51 à 53, 200 à 202, 300, 400) d'émission de lumière est disposé dans la partie de l'extrémité (41) arrière de la traverse.

3. Véhicule suivant l'une des revendications précédentes,
**caractérisé en ce que**
l'élément (51à 53, 200 à 202, 300, 400) d'émission de lumière est disposé de manière à ce que la direction principale de rayonnement du lobe (60) de la lumière émise s'étende au-dessus du petit côté (43) supérieur de la traverse (40) de séparation de bagages, en faisant un angle (α ) aigu à partir du petit côté (43) supérieur, en s'éloignant vers le haut et/ou dans la direction du côté d'introduction des bagages.

4. Véhicule suivant l'une des revendications précédentes,
**caractérisé en ce que**,
sur la traverse (40) de séparation de bagages, sont disposés, dans la traverse (40) de séparation de bagages ou au moins dans la région de la traverse (40) de séparation de bagages, au moins deux éléments (51 à 53, 200 à 202, 300, 400) d'émission de lumière, dont les couleurs de la lumière sont différentes, ou est disposé au moins un élément d'émission de lumière, dont la couleur de la lumière est réglable.

5. Véhicule suivant l'une des revendications précédentes,
**caractérisé en ce que**
la traverse (40) de séparation de bagages est constituée en tout ou par tronçon d'un matériau (40) transparent ou luminescent.

6. Véhicule suivant la revendication 5,
**caractérisé en ce que**
l'élément (300, 400) d'émission de lumière ou au moins l'un des éléments d'émission de lumière est dirigé sur la traverse (40) de séparation de bagages et la lumière de l'élément (300, 400) d'émission de lumière est injectée dans le matériau (40a) transparent ou luminescent, grâce à quoi la traverse (40) de séparation de bagages est mise en luminosité.

7. Véhicule suivant l'une des revendications précédentes,
**caractérisé en ce que**
l'élément (51 à 53, 300) d'émission de lumière ou au moins l'un des éléments d'émission de lumière est une source lumineuse à fonctionnement électrique, qui est disposée à l'extérieur sur la traverse (40) de séparation de bagages ou dans la traverse (40) de séparation de bagages.

8. Véhicule suivant l'une des revendications précédentes,
**caractérisé en ce que**
l'élément d'émission de lumière ou au moins l'un des éléments d'émission de lumière est un élément (200 à 202, 400) passif de guide d'onde, qui est en liaison avec une source (211 à 213, 410) lumineuse active et qui conduit la lumière de la source (211 à 213, 410) lumineuse active dans la région de la traverse (40) de séparation de bagages et l'émet dans la région de la traverse (40) de séparation de bagages.

9. Véhicule suivant la revendication 8,
**caractérisé en ce que**
l'élément (200 à 202, 400) passif conducteur de la lumière est disposé, au moins par endroit, à l'extérieur sur la traverse (40) de séparation de bagages et/ou, au moins par endroit, à l'intérieur de la traverse (40) de séparation de bagages.

10. Véhicule suivant l'une des revendications 8 à 9 précédentes,
**caractérisé en ce que**
la source (211 à 213, 410) lumineuse active, en liaison avec l'élément (200 à 202, 400) passif de conduite de la lumière, est séparée de la traverse (40) de séparation de bagages et est disposée à distance de celle-ci.
